# EUROPÄISCHE PATENTSCHRIFT

(11) **EP 1 380 082 B1**
(45) Veröffentlichungstag und Bekanntmachung des Hinweises auf die Patenterteilung: **24.05.2006**
(21) Anmeldenummer: 02722016.9
(22) Anmeldetag: 27.03.2002
(51) Int. Cl.: H02B 1/36

(54) **NIEDERSPANNUNGS-SCHALTANLAGE MIT EINER VERRIEGELUNGSVORRICHTUNG FÜR EINEN GERÄTEEINSCHUB**
LOW VOLTAGE SWITCHGEAR COMPRISING A LOCKING DEVICE FOR AN APPLIANCE MODULE
INSTALLATION DE COMMUTATION BASSE TENSION COMPORTANT UN DISPOSITIF DE VERROUILLAGE POUR MODULE D'APPAREILS

(30) Priorität: 20.04.2001 DE 10120737
(43) Veröffentlichungstag der Anmeldung: 14.01.2004
(73) Patentinhaber: SIEMENS AKTIENGESELLSCHAFT, 80333 München (DE)
(72) Erfinder: ZICKMANTEL, Mathias, 04329 Leipzig (DE); SCHMIDT, Mario, 04178 Leipzig (DE)
(86) Internationale Anmeldenummer: PCT/DE2002/001145
(87) Internationale Veröffentlichungsnummer: WO 2002/087037

(56) Entgegenhaltungen:
- DE-A- 2 432 381
- US-A- 1 706 114

## Beschreibung

Die Erfindung betrifft eine Niederspannungs-Schaltanlage mit einem Gerüst, mit ortsfest am Gerüst angeordneten Führungsteilen, mit einem Geräteeinschub zur Aufnahme von Geräten der Schalt- Steuer- und Schutztechnik, der über die Führungsteile aus einer Trennstellung in eine Betriebsstellung schiebbar ist und mit wenigstens einer Verriegelungsvorrichtung zur Sicherung des Geräteeinschubes gegen eine unzulässige Bedienung, bei der die Verriegelungsvorrichtung einen Verriegelungsbalken, ein Hubgestänge zur Überführung des Verriegelungsbalkens aus einer den Geräteeinschub sperrenden Ruhestellung in eine die Verschiebung freigebende Arbeitsstellung und ein an einer Bedienfront des Geräteeinschubes angeordnetes Stellorgan zur Betätigung des Hubgestänges aufweist, wobei der Verriegelungsbalken in einem Gehäuse des Geräteeinschubes schwenkbar angeordnet ist, wobei sich der Verriegelungsbalken quer zur Richtung der Verschiebung und im Wesentlichen über die gesamte Breite des Gehäuses erstreckt, wobei der Verriegelungsbalkens an seinen Enden mit jeweils einer Positionskulisse jeweils eines der Führungsteile zusammenwirkt, die eine mit dem Verriegelungsbalken zusammenwirkende Kontur mit Raststufen für die Trenn- und Betriebsstellung aufweist, wobei das Gehäuse Träger eines Hauptschalters und von Trennkontakten ist und wobei ein Betätigungsorgan des Hauptschalters an der Bedienfront und die Trennkontakte an einer Rückwand des Gehäuses angeordnet sind.

Eine Niederspannungs-Schaltanlage dieser Art ist durch die Druckschrift US-A-1,706,114 bekannt geworden. Bei dieser bekannten Niederspannungs-Schaltanlage sind keine Hilfstrennkontakte und somit auch keine Teststellung des Geräteeinschubes vorgesehen.

Ausgehend von einer Niederspannungs-Schaltanlage mit den Merkmalen des Oberbegriffes des Anspruches 1 (US-A-1,706,114) liegt der Erfindung die Aufgabe zu Grunde, Hilfstrennkontake zum Herstellen einer Teststellung des Geräteeinschubes vorzusehen und dabei eine Bauform anzugeben, bei der der Geräteeinschub auf einfache Weise in seiner Teststellung gegen ein Verschieben sicherbar ist.

Diese Aufgabe wird erfindungsgemäß dadurch gelöst, dass der Geräteeinschub Hilfstrennkontakte aufweist, die zum Eingriff mit zugeordneten ortsfesten Hilfstrennkontakten, mittels einer Betätigungsvorrichtung relativ zu dem Gehäuse des Geräteeinschubes verschiebbar angeordnet sind, und dass die Betätigungseinrichtung eine den Verriegelungsbalken erfassende Blockiernase aufweist, die bei in Eingriff stehenden Hilfstrennkontakten den Verriegelungsbalken in seiner Ruhestellung sperrt.

An sich ist eine Niederspannungs-Schaltanlage bekannt, bei der ein Geräteeinschub sowohl in Trenn- und Betriebsstellung als auch in Teststellung gegen Verschieben sicherbar ist (DE 32 43 060 - Al (= EP 0 109 555 B1)). - Darin wird davon ausgegangen, dass es bekannt ist, eine manuelle Verriegelung zusätzlich zu der Antriebsvorrichtung eines Hauptschalters vorzusehen. Es wird dann eine Lösung beschrieben, bei der eine am Fachboden angeordnete Profilschiene zur Führung des Geräteeinschubes und zur Verriegelung in den genannten Positionen im Zusammenwirken mit der Antriebsvorrichtung des Hauptschalters dient. Dies führt zu einer für den Benutzer sehr bequemen und sicheren Handhabung, erfordert jedoch relativ komplizierte Bauteile. Dieser Gesichtspunkt kann erhebliche Bedeutung haben, wenn die Bedingung besteht, dass Hersteller mit ganz unterschiedlichen Fertigungsmitteln gleiche und gleichermaßen zuverlässige Schaltanlagen fertigen können.

Die Erfindung strebt eine hierfür besonders geeignete Bauform einer Niederspannungs-Schaltanlage an und geht hierzu von einer getrennten Bedienung eines auf dem Geräteeinschub befindlichen Hauptschalters und einer Positionsverriegelung aus.

Die erfindungsgemäße Gestaltung der Niederspannungs-Schaltanlage ermöglicht nicht nur eine sichere Positionsverriegelung von Geräteeinschüben einer beliebigen Breite, sondern auch alle sonstigen benötigten Verriegelungen, wie noch erläutert wird. Diese können ohne großen Aufwand hinzugefügt werden, weil die Erstreckung des Verriegelungsbalkens über die Breite des Geräteeinschubes es erlaubt, zusätzliche Baugruppen für eine Verriegelung an einer beliebigen Stelle anzubringen. Im Prinzip sind daher Geräteeinschübe unterschiedlicher Breite mit den gleichen Verriegelungsbaugruppen auszustatten. Unterschiedlich ist dabei jeweils nur die Länge des Verriegelungsbalkens. Aber auch diese Bedingung stellt keine Beschränkung dar, da der Verriegelungsbalken aus Teilen herstellbar ist, die je nach der Breite des Geräteeinschubes mit einer geeigneten Überlappung verbunden werden.

Das erwähnte Zusammenwirken des Verriegelungsbalkens mit den Führungsteilen kann nach einer Ausgestaltung der Erfindung dadurch sichergestellt werden, dass der Verriegelungsbalken an seinen Enden mit Riegelnasen versehen ist, die jeweils über den Umriss des Gehäuses überstehen und dass die Positionskulissen zum Eingreifen der Riegelnasen dienende Vertiefungen für die Betriebs- und die Trennstellung aufweisen. Die Benutzung geschieht dann in der Weise, dass zu einem Wechsel der Position des Geräteeinschubes, z. B. von der Teststellung in die Betriebsstellung, jeweils das Stellorgan zu betätigen ist, um den Verriegelungsbalken zu schwenken und seine Riegelnasen aus einer Stufe bzw. Vertiefung der Positionskulisse heraus zu heben.

Um den Benutzer von besonderer Aufmerksamkeit bei der Bedienung zu entlasten, empfiehlt es sich, dass die Positionskulisse einen Hauptkanal mit einer Mündung zum Einführen der Riegelnase und Anschlagflächen zum zwangsläufigen Anhalten einer Verschiebung des Geräteeinschubes beim Einsetzen des Geräteeinschubes in die Führungsteile besitzt. Hierdurch wird vermieden, dass der Geräteeinschub nach dem Einsetzen in die Führungsteile direkt in die Trenn- oder die Betriebsstellung gelangen kann. Auch bei ordnungsgemäßer Handhabung unter Benutzung des Stellorgans für den Verriegelungsbalken wird das Einschieben unterbrochen.

Gleichfalls zu einer Entlastung des Benutzers von erhöhter Aufmerksamkeit kann dadurch beigetragen werden, dass eine der Trennstellung des Geräteeinschubes zugeordnete Vertiefung der Kulisse durch Vorsprünge überdeckt ist, die in beiden Richtungen der Verschiebung die Riegelnase des Verriegelungsbalkens gegen eine unbeabsichtigte Freigabe abstützen. Diese Vorsprünge, die sich zweckmäßig nur über einen kleinen Teil der Länge der Vertiefung für die Trennstellung erstrecken, fangen die Riegelnasen ab, wenn diese z. B. aufgrund einer zu heftigen Betätigung des Geräteeinschubes springen oder prellen und zufällig bis zur Oberkante der Vertiefung angehoben werden.

Die an sich bekannte Anordnung zur Sperrung des Hauptschalters gegen unzulässiges Einschalten durch eine Riegelstange, die mittels einer Betätigungswelle des Hauptschalters zum Eingreifen in eine Öffnung eines den Geräteinschub tragenden Fachbodens zu bringen ist, kann im Rahmen der Erfindung dadurch ergänzt werden, dass durch ein zugleich betätigtes Blockierstück der Verriegelungsbalken oder sein Hubgestänge blockierbar ist. Auf diese Weise werden alle von dem Verriegelungsbalken abhängigen Baugruppen gleichfalls deaktiviert.

Während Geräteeinschube für kleine und mittlere Leistungen von Hand in die Betriebsstellung gebracht werden können, sind die Trennkontakte bei größeren Leistungen relativ schwergängig. Deshalb ist es bekannt, in diesem Fall die Geräteeinschübe mit einem Fahrantrieb auszustatten. Der Verriegelungsbalken nach der Erfindung bietet in diesem Zusammenhang ein einfaches und wirksames Mittel, eine Betätigung des Fahrantriebes nur bei einem entsprechenden Betriebszustand des Geräteeinschubes freizugeben. Dies kann dadurch geschehen, dass am Verriegelungsbalken eine Verschlussblende zum Verdecken eines Einsteckloches für ein Bedienungswerkzeug eines Fahrantriebes des Geräteeinschubes angebracht ist, derart, dass bei in seiner Ruhestellung befindlichem Verriegelungsbalken der Fahrantrieb unzugänglich ist.

Unabhängig davon, ob alle vorstehend erwähnten Verriegelungen vorhanden sind oder nur ein Teil derselben kann an der Bedienfront des Geräteeinschubes wenigstens ein Griffbügel angebracht sein, wobei das zur Betätigung des Verriegelungsbalkens vorgesehene Stellorgan in einer solchen Entfernung von dem Griffbügel und in einer solchen Position angeordnet ist, dass beim Umgreifen des Griffbügels mit den vier Fingern einer Hand der Daumen dem Drucktaster gegenübersteht. Der Benutzer kann daher den Geräteeinschub mit der gleichen Handstellung entriegeln und verfahren.

Um die Aufrechterhaltung der gewünschten Positionen des Geräteeinschubes sicherzustellen, muss vermieden werden, dass die Riegelnasen durch Anheben des Geräteeinschubes außer Eingriff mit der Positionskulisse gelangen. Dies kann nach einer Weiterbildung dadurch erreicht werden, dass durch die Anordnung von Fachböden das vertikale Spiel des Geräteeinschubes auf ein Maß beschränkt ist, das kleiner ist als die Vertiefungen der Positionskulisse.

Die Erfindung wird im Folgenden anhand des in den Figuren dargestellten Ausführungsbeispieles näher erläutert.

Die Figur 1 zeigt in perspektivischer Darstellung einen Geräteeinschub für eine Niederspannungs-Schaltanlage.

Die Figur 2 zeigt den Einschub gemäß der Figur 1 von oben in seiner Betriebsstellung.

Die Figur 3 zeigt als vergrößerte Einzelheit eine Positionskulisse und einen Riegelzapfen, der entsprechend der Figur 2 in der Positionskulisse die Betriebsstellung einnimmt.

Die Figuren 4 und 5 sind den Figuren 2 und 3 entsprechende Darstellungen, bei denen sich der Geräteeinschub und der Riegelzapfen in der Teststellung befinden. Hilfstrennkontakte sind geöffnet gezeigt.

Die Figuren 6 und 7 entsprechen den Figuren 4 und 5 mit dem Unterschied, dass die Hilfstrennkontakte geschlossen sind.

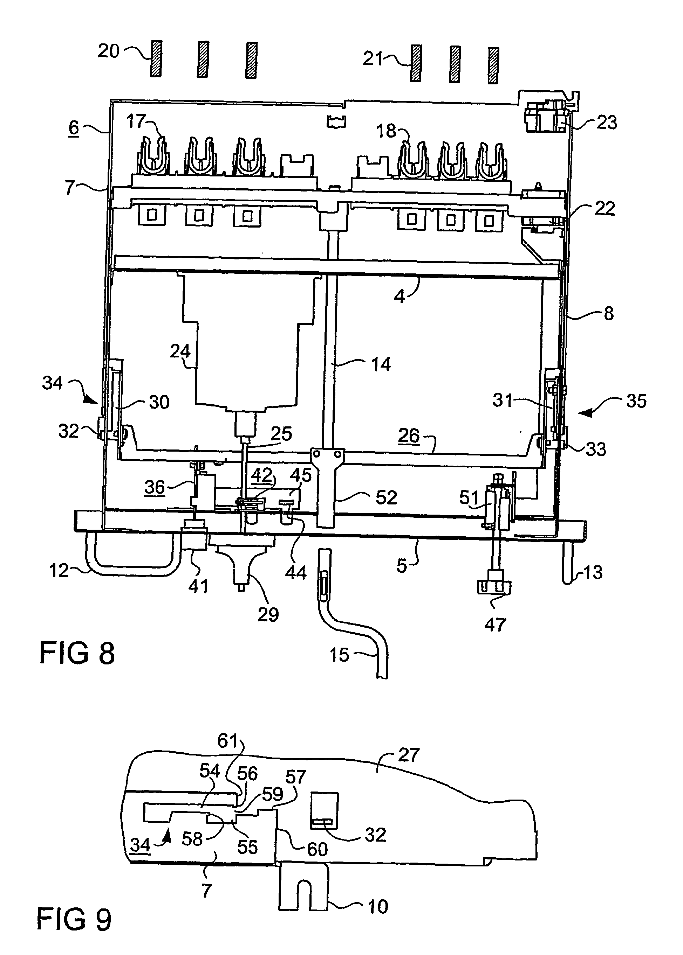

Gleichfalls in der Darstellung entsprechend den vorangehenden Figuren veranschaulichen die Figuren 8 und 9 die Trennstellung des Geräteinschubes.

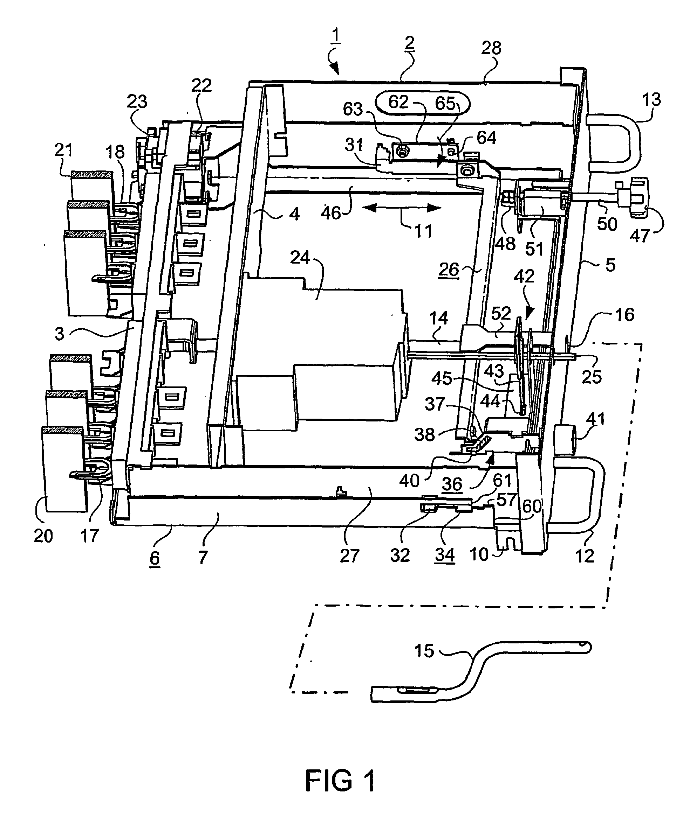

Der in der Figur 1 gezeigte Geräteeinschub 1 weist ein rahmenartiges Gehäuse 2 mit einer Rückwand 3, einer hierzu parallelen Montageplatte 4 und einer Bedienfront 5 auf. Der Geräteeinschub 1 befindet sich auf einem Fachboden 6, der seitliche Abkantungen 7 und 8 als Führungsteile für den Geräteeinschub laufweist. In bekannter Weise kann der Fachboden 6 im Gerüst einer Niederspannungs-Schaltanlage montiert sein, z. B. mittels in der Figur 1 gezeigter Haltelaschen 10. Einzelheiten dieser Anordnung sind nicht dargestellt, einerseits, weil diese Einzelheiten an sich bekannt sind und andererseits, weil sie zum Verständnis der Erfindung nicht benötigt werden.

Der Geräteeinschub 1 ist in der Richtung eines in der Figur 1 gezeigten Doppelpfeiles 11 verschiebbar, um die charakteristischen Positionen, nämlich Trennstellung, Teststellung und Betriebsstellung, herbeizuführen. Bevor auf diese Stellungen näher eingegangen wird, sollen zunächst weitere Merkmale des Geräteeinschubes 1 erläutert werden.

Zur Handhabung des Geräteeinschubes 1 stehen dem Benutzer zwei in der Figur 1 gezeigte Handgriffe 12 und 13 zu Verfügung, die an der Bedienfront 5 angebracht sind. Die gezeigte Anordnung, Handgriff 12 horizontal, Handgriff 13 vertikal, erwiest sich als ergonomisch zweckmäßig, kann jedoch beliebig abgewandelt werden. Zusätzlich verfügt der Geräteeinschub 1 über einen Fahrantrieb, zu dem insbesondere eine das Gehäuse 2 in der Richtung des Pfeiles 11 durchsetzende Fahrwelle 14 mit einem Gewindeabschnitt und ein rückseitig am Fachboden 6 angeordnetes Mutterstück gehören, wie dies gleichfalls an sich bekannt ist. Eine als Bedienungswerkzeug des Fahrantriebes vorgesehene Handkurbel 15 ist, wie strichpunktiert angedeutet, in eine an der Bedienfront 5 angeordnete Einstecköffnung 16 einführbar, um die Fahrwelle 14 nach Bedarf zu betätigen.

In der Figur 1 ist der Geräteeinschub 1 in seiner Betriebsstellung gezeigt, in welcher rückseitige Trennkontakte 17 (Einspeisung) und 18 (Ausgang) im Eingriff mit Feldschienen 20 bzw. Anschlussstücken 21 stehen. Gleichfalls befinden sich relativ zum Gehäuse 2 in der Richtung des Pfeiles 11 verschiebbar angeordnete Hilfstrennkontakte 22 im Eingriff mit einem ortsfesten Hilfstrennkontakt 23.

Zur Herstellung der Betriebsstellung gemäß der Figur 1 wird eine Kraft benötigt, um die (Haupt-)Trennkontakte 17 und 18 sowie die Hilfstrennkontakte 22 mit ihren ortsfesten Gegenstücken in Eingriff zu bringen. Offensichtlich hängt diese Kraft insbesondere von dem Strom ab, für den die Trennkontakte 17 und 18 bemessen sind. Daher sind Geräteeinschübe für Verbraucher mit kleiner Leistung leichter zu handhaben als solche für große Leistungen. Dementsprechend wird die Fahrwelle 14 nur bei "großen" Geräteeinschüben benötigt. Sie ist jedoch in den Figuren 1,2,4,6,und 8 gezeigt, um zu veranschaulichen, dass sich im Rahmen der Erfindung ein Fahrantrieb zwanglos in das System der noch zu erläuternden Verriegelungsvorrichtungen integrieren lässt.

Der Geräteeinschub 1 ist ohne Verdrahtung und Verkabelung gezeigt, um die für die Erfindung wesentlichen Verriegelungsvorrichtungen nicht zu verdecken. Ferner sind nicht alle zu einer Gerätekombination für Motorsteuerungen gehörenden Schalt-, Steuer- und Schutzgeräte gezeigt, sondern nur ein Hauptschalter 24. Dieser ist auf der erwähnten Montageplatte 4 befestigt und kann mittels einer an der Bedienfront 5 zugänglichen Betätigungswelle 25 ein- und ausgeschaltet werden.

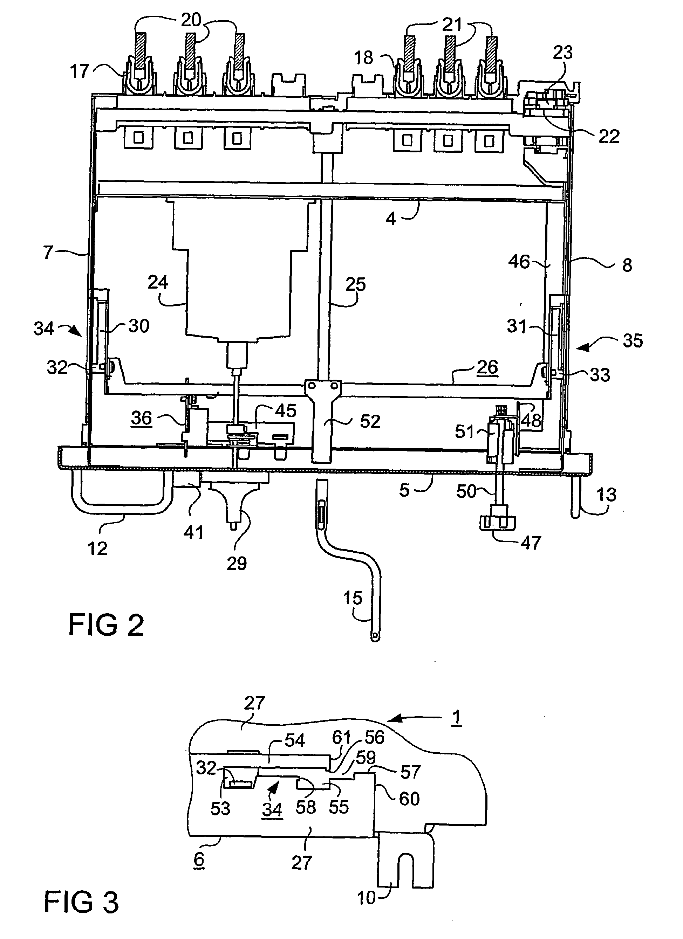

Ein wesentliches Merkmale der Verriegelungsvorrichtung gemäß der Erfindung ist ein Verriegelungsbalken 26, der sich im vorderen Teil des Gehäuses 2 parallel zur Bedienfront 5 und über die ganze Breite des Gehäuses 2 erstreckt. An seinen Enden trägt der Verriegelungsbalken 26 parallel zu Seitenwänden 27 und 28 des Gehäuses 2 stehende Schwenkarme 30 und 31. Diese Schwenkarme greifen mit je einem Lagerzapfen in eine Öffnung der Seitenwände 27 und 28 und ermöglichen eine Schwenkbewegung des Verriegelungsbalkens 26, die sich im Wesentlichen in einer Anhebung bzw. Absenkung relativ zu dem Fachboden 6 äußert. An seinen Enden ist der Verriegelungsbalken 26 ferner mit Riegelnasen 32 und 33 versehen, die durch Fenster 34 und 35 in den Seitenwänden 27 und 28 ragen und mit Positionskulissen 34 und 35 zusammenwirken, die in die Abkantungen 7 und 8 des Fachbodens 6 eingearbeitet sind. Einzelheiten dieser Anordnung werden anhand der Figuren 3, 5, 7 und 9 noch erläutert.

Befindet sich der Verriegelungsbalken 26 in seiner abgesenkten Ruhestellung, so ist der Geräteeinschub 1 gegen eine Verschiebung gesperrt. Um eine Verschiebung freizugeben, muss der Verriegelungsbalken 26 in seine Arbeitsstellung angehoben werden, was durch ein Hubgestänge 36 ermöglicht wird. Zu diesem gehört ein Kulissenschieber 37 mit einer abgeknickten Kulisse 38, in die ein am Verriegelungsbalken 26 sitzender Hubstift 40 eingreift. Ein Anfangsteil der Kulisse 38 erstreckt sich parallel zum Fachboden 6. Befindet sich der Hubstift 40 in diesem Anfangsteil, so ist der Verriegelungsbalken 26 blockiert und kann nicht direkt von Hand oder durch beliebige andere Einflüsse in seine Arbeitsstellung angehoben werden. Dies ist ausschließlich durch Betätigung des Kulissenschiebers 37 mittels eines an der Bedienfront 5 angebrachten, als Drucktaster ausgebildeten Stellorgans 41 möglich. Hierbei gelangt der Hubstift 40 in einen ansteigenden Teil der Kulisse 38, wodurch der Verriegelungsbalken 26 um seine Schwenkarme 30 und 31 bewegt und entsprechend angehoben wird.

Das Stellorgan 41 ist in der Nähe des linken Griffbügels 12 in einer solchen Position angeordnet, dass es im Griffbereich des Daumens der linken menschlichen Hand liegt, wenn die Finger derselben Hand den Griffbügel 12 umfassen. Eine Betätigung des Verriegelungsbalkens 26 und eine Verschiebung des Geräteeinschubes 1 können daher mit derselben Stellung der Hand erfolgen.

Auf der Betätigungswelle 25 des Hauptschalters 24 sitzt ein Sperrhebelsystem 42, das in bekannter Weise einen mit der Betätigungswelle 25 verbundenen Schwenkhebel und eine mit diesem gelenkig verbundene oder durch eine Kulisse gekoppelte, etwa rechtwinklig zum Fachboden 6 stehende Riegelstange 43 umfasst. Parallel zum Boden des Gehäuses 2 bzw. zum Fachboden 6 ist eine mit dem Stellorgan 41 verbundene Riegelplatte 45 an Führungslaschen geführt. In der Riegelplatte 45 befindet sich eine Riegelöffnung 44, in welche die Riegelstange 43 nur eingreifen kann, wenn sich das Stellorgan 41 in seiner nicht betätigten Ruhestellung befindet. Im Fachboden 10 befindet sich eine Riegelöffnung 44, in welche die Riegelstange nur eingreifen kann. Wenn sich der Geräteeinschub 1 in seiner Betriebsstellung befindet (Figuren 1 und 2). Daher kann der Hauptschalter 24 nur in dieser Position der Riegelplatte 45 eingeschaltet werden. Die Riegelplatte 45 besitzt zwei Riegelöffnungen 44, damit bei gegebener Anbringung des Stellorgans 41 und der Riegelplatte 45 der Hauptschalter 24 in einer anderen Position montiert oder ein anderer Hauptschalter benutzt werden kann.

Der bewegbare Hilfstrennkontakt 22 sitzt an einem in der Richtung des Doppelpfeiles 11 bewegbar geführten Kontaktschieber 46, der mittels einer Schubstange 50 und eines daran befestigten Betätigungsgriffes 47 verschiebbar ist. Eine Bajonettführung 51 dient dazu, die Schubstange 50 in den Endstellungen (Hilfstrennkontakt 22 geöffnet oder geschlossen) zu verriegeln. Die Betätigung der Hilfstrennkontakte 22 kann statt durch die Schubstange 50 auch durch einen Schrauben- oder Schneckenantrieb etwa gemäß der DE 27 17 691 erfolgen. Wesentlich ist in jedem Fall eine Blockiernase 48, die in eine Öffnung des Verriegelungsbalkens 26 einführbar ist, um diesen gegen Anheben in die Arbeitsstellung zu sperren, wenn die Hilfstrennkontakte 22, 23 geschlossen sind.

Der Kontaktschieber 46 ist durch ein Sperrstück 62 in seiner Grundstellung blockierbar. Das Sperrstück ist hierzu um ein an der Seitenwand 28 des Gehäuses 2 angeordnetes Schwenklager 63 bewegbar und kann durch Lösen einer Halteschraube 64 im Sinne eines Pfeiles 65 abgesenkt werden. In dieser angesenkten Stellung greift eine Sperrnase in eine entsprechende Ausnehmung (beides verdeckt) am Kontaktschieber 46.
Ist der Geräteeinschub, wie vorstehend beschrieben, mit einem Fahrantrieb ausgestattet, so soll kein Zugang zu der Fahrwelle bestehen, wenn der Hauptschalter 24 eingeschaltet ist. Dies wird durch eine Verschlussblende 52 erreicht, die am Verriegelungsbalken 26 angebracht ist und die in der Ruhestellung des Verriegelungsbalkens 26 derart hinter der Einstecköffnung 16 steht, dass die als Bedienwerkzeug für die Fahrwelle 14 vorgesehene Handkurbel 15 nicht auf die Fahrwelle 14 aufgesteckt werden kann.

Im Folgenden wird anhand der Figuren 2 bis 9 die Wirkungsweise der Positionsverriegelung näher erläutert.

In der Figur 2 ist der Geräteeinschub 1 nochmals in seiner Betriebsstellung gezeigt, wobei die Positionskulisse 34 mit abgebrochen dargestellten angrenzenden Teilen als vergrößerte Einzelheit in der Figur 3 gezeigt ist. Die Positionskulisse 34 weist eine mehrfach abgestufte Kontur auf, die mit der Riegelnase 32 des Verriegelungsbalken 26 zusammenwirkt. Ein Hauptkanal 54 weist ein vorn liegende Mündung 59 auf, unterhalb derselben eine Anschlagfläche 60 und oberhalb derselben eine Anschlagfläche 61 angeordnet ist. In der Betriebsstellung ist der Geräteeinschub 1 dadurch gesichert, dass die Riegelnase 32 in eine Vertiefung 53 der Positionskulisse eintaucht. Durch ein sinngemäßes Zusammenwirken des Riegelzapfens 33 mit der Positionskulisse 35 an der gegenüberliegenden Seite des Einschubrahmens 2 wird eine sichere Abstützung erreicht. Daher sind Schäden durch den Versuch einer missbräuchlichen Verkantung des Geräteeinschubes ausgeschlossen.

Zur Verfahren des Geräteeinschubes 1 ist es erforderlich, den Verriegelungsbalken 26 durch Betätigen des Stellorgans 41 in seine Arbeitsstellung anzuheben, wobei dann der Riegelzapfen 32 aus der Vertiefung 53 in den Hauptkanal 54 der Positionskulisse 34 gelangt. Nun kann der Geräteeinschub 1 mittels der Fahrwelle 14 in seine Trennstellung gebracht werden, die durch eine weitere Vertiefung 55 der Positionskulisse 34 bestimmt ist. Bei einer relativ langsamen Ausziehbewegung, wie sie der Fahrantrieb bewirkt, gelangt der Riegelzapfen selbsttätig in die Vertiefung 55. Besitzt jedoch der Geräteeinschub keinen Fahrantrieb und wird dementsprechend von Hand verschoben, so sorgt ein in den Hauptkanal 54 ragender Vorsprung 56 oberhalb der Mündung 59 dafür, das die Ausziehbewegung des Geräteeinschubes 1 zwangsläufig unterbrochen wird.

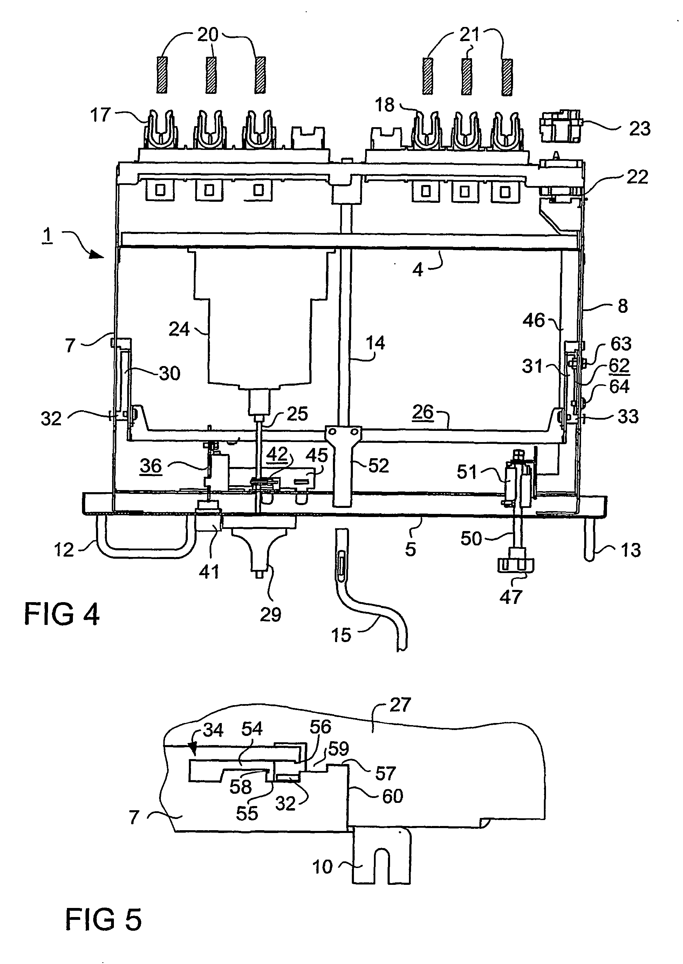

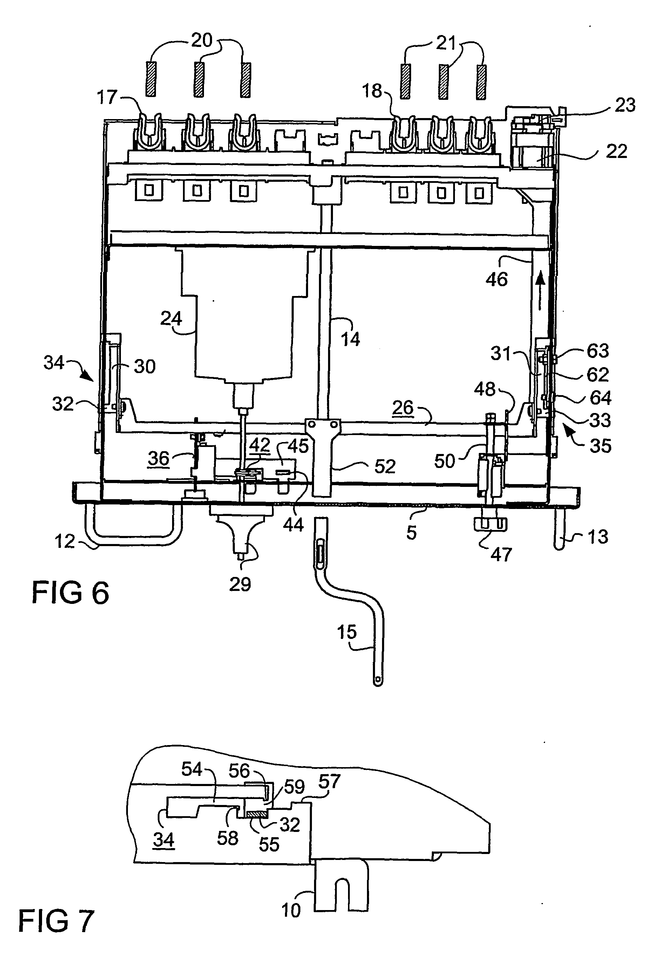

In der Trennstellung gemäß den Figuren 4 und 5 sind sowohl die (Haupt-) Trennkontakte 17 und 18 als auch die Hilfstrennkontakte 22 von ihren ortsfesten Gegenstücken 20, 21 bzw. 23 getrennt. Ausgehend von dieser Stellung des Geräteeinschubes 1 im Einschubrahmen 7 kann nun die Teststellung dadurch herbeigeführt werden, dass mittels der Schubstange 50 und des Kontaktschiebers 46 der bewegbare Hilfstrennkontakt 22 in Eingriff mit dem ortsfesten Hilfstrennkontakt 23 gebracht wird, wie dies die Figur 6 zeigt. Die zugehörige Figur 7 entspricht der Figur 5, da der Geräteeinschub 1 seine Position zum Fachboden 6 insgesamt nicht verändert hat. Die Riegelnase 32 befindet sich somit unverändert in der Vertiefung 55.

Als weitere Position verfügt die Anordnung nach der Erfindung über eine Absetz- oder Entnahmestellung gemäß den Figuren 8 und 9. In diese gelangt der Geräteeinschub 1 dadurch, dass durch Betätigung des Stellorgans 41 die Riegelnasen aus der Vertiefung 55 ausgehoben werden. Haben dann die Riegelnasen beim Ziehen des Geräteeinschubes 1 die Mündung 59 des Hauptkanals 54 der Positionskulissen 34, 35 passiert, so werden sie nochmals durch einen oberhalb der Anschlagfläche 60 gelegenen Vorsprung 57 angehalten, der gleichfalls durch Betätigen des Stellorgans 41 überwunden werden kann. Danach befinden sich die Riegelzapfen 32 und 33 außerhalb der Positionskulissen 34 und 35, so dass nun der Geräteinschub 1 von Fachboden 6 abgenommen werden kann.

Als weitere Besonderheit besteht die Möglichkeit, den Geräteeinschub 1 in der Trennstellung gemäß den Figuren 4 und 5 abzuschließen. Hierzu wird zunächst der Kontaktschieber 46 in der Grundstellung gesperrt, indem nach Lösen der Halteschraube 64 das Sperrstück 62 geschwenkt wird. Aufgrund der Anbringung des Sperrstückes 62 an der Seitenwand 28 ist dies nur möglich, wenn sich der Geräteeinschub 1 außerhalb der Schaltanlage befindet. Dann wird der Geräteeinschub 1 in der beschriebenen Weise in die Schaltanlage eingesetzt und auf dem Fachboden 6 verschoben, bis die Trennstellung erreicht ist. Nun kann der Hauptschalter 24 eingeschaltet und in bekannter Weise (Vorhängeschloss am Schaltgriff 29) abgeschlossen werden. Hierbei tritt die Riegelstange 43 durch die Riegelöffnung 44 in der Riegelplatte 45 und weiter durch eine Öffnung im Fachboden 6 (bekannt, nicht gezeigt). Der Geräteeinschub ist hierdurch gegen eine Verschiebung gesichert. Der Fahrantrieb, soweit vorhanden, kann gleichfalls nicht betätigt werden, weil die Einstecköffnung für die Handkurbel 15 durch die Verschlussblende 52 verdeckt ist.

Wir der Geräteeinschub ausgehend von der Stellung gemäß den Figuren 8 und 9 in den Einschubrahmen eingeschoben, so stoßen die Riegelnasen 32 und 33 gegen die unterhalb der Mündung 59 gelegene Anschlagfläche 60. Wird das Stellorgan 41 betätigt, so werden die Riegelnasen 32, 33 angehoben und können nun die Anschlagfläche 60 überwinden. Anschließend stoßen die Riegelnasen 32, 33 gegen die obere Anschlagfläche 61. Durch leichte Rückwärtsbewegung wird die Reibung zwischen den Riegelnasen 32, 33 und der Anschlagfläche 61 aufgehoben und die Riegelnasen gelangen in den Hauptkanal 54, von wo sie in die Vertiefung 55 für die Trennstellung eintreten können. Damit die Riegelnasen 32, 33 nicht durch eine unbeabsichtigte Schwingung oder Prellung aus der Vertiefung 55 heraus und direkt in den Hauptkanal 54 gelangen kann, ist am Übergang von der Vertiefung 55 zum Hauptkanal 54 in der Richtung zu der Vertiefung 53 ein weiterer Vorsprung 58 angeordnet.

### Bezugszeichen

- 1: Geräteeinschub (als Ganzes)
- 2: Gehäuse des Geräteeinschubes
- 3: Rückwand des Gehäuses 2
- 4: Montageplatte im Gehäuse 2
- 5: Bedienfront
- 6: Fachboden
- 7: Linke Abkantung des Fachbodens 6
- 8: Rechte Abkantung des Fachbodens 6

- 10: Haltelasche am Fachboden 6
- 11: Doppelpfeil
- 12: Handgriff (links)
- 13: Handgriff (rechts)
- 14: Fahrwelle
- 15: Handkurbel für Fahrwelle
- 16: Einsteckloch in der Bedienfront
- 17: Trennkontakt (Einspeisung)
- 18: Trennkontakt (Ausgang)

- 20: Feldschiene
- 21: Anschluss
- 22: Bewegbarer Hilfstrennkontakt
- 23: Ortsfester Hilfstrennkontakt
- 24: Hauptschalter
- 25: Betätigungswelle des Hauptschalters 24
- 26: Verriegelungsbalken
- 27: Linke Seitenwand des Gehäuses 2
- 28: Rechte Seitenwand des Gehäuses 2

- 30: Schwenkarm am Verriegelungsbalken 26 (links)
- 31: Schwenkarm am Verriegelungsbalken 26 (rechts)

- 32: Riegelnase am Verriegelungsbalken 24 (links)
- 33: Riegelnase am Verriegelungsbalken 24 (rechts)
- 34: Positionskulisse (links)
- 35: Positionskulisse (rechts)
- 36: Hubgestänge
- 37: Hubschieber
- 38: Kulisse im Hubschieber

- 40: Hubzapfen am Verriegelungsbalken 26
- 41: Stellorgan
- 42: Sperrhebelsystem
- 43: Riegelstange
- 44: Riegelöffnung in der Riegelplatte 45
- 45: Riegelplatte
- 46: Schubstange
- 47: Bediengriff
- 48: Blockiernase

- 50: Kontaktschieber
- 51: Bajonettführung
- 52: Verschlussblende
- 53: Vertiefung der Positionskulisse 34 für Betriebsstellung
- 54: Hauptkanal der Positionskulisse
- 55: Vertiefung der Positionskulisse für Trenn- u. Teststellung
- 56: Vorsprung oberhalb der Vertiefung 55
- 57: Vorsprung an der Mündung des Hauptkanals 54
- 58: Vorsprung zwischen Vertiefung 55 und Hauptkanal 54
- 59: Mündung des Hauptkanals 54

- 60: Anschlagfläche unterhalb des Vorsprunges 57
- 61: Anschlagfläche oberhalb der Mündung 59
- 62: Sperrstück für Schubstange 50
- 63: Schwenklager des Sperrstückes 62
- 64: Halteschraube für Sperrstück 62
- 65: Pfeil (Schwenkung des Sperrstückes 62)

## Patentansprüche

1. Niederspannungs-Schaltanlage mit einem Gerüst, mit ortsfest am Gerüst angeordneten Führungsteilen (7, 8), mit einem Geräteeinschub (1) zur Aufnahme von Geräten der Schalt- Steuer- und Schutztechnik, der über die Führungsteile aus einer Trennstellung in eine Betriebsstellung schiebbar ist und mit wenigstens einer Verriegelungsvorrichtung zur Sicherung des Geräteeinschubes (1) gegen eine unzulässige Bedienung,
- bei der die Verriegelungsvorrichtung einen Verriegelungsbalken (26), ein Hubgestänge (36) zur Überführung des Verriegelungsbalkens (26) aus einer den Geräteeinschub (1) sperrenden Ruhestellung in eine die Verschiebung freigebende Arbeitsstellung und ein an einer Bedienfront (5) des Geräteeinschubes (1) angeordnetes Stellorgan (41) zur Betätigung des Hubgestänges (36) aufweist,
- wobei der Verriegelungsbalken (26) in einem Gehäuse (2) des Geräteeinschubes (1) schwenkbar angeordnet ist,
- wobei sich der Verriegelungsbalken (26) quer zur Richtung der Verschiebung (11) und im Wesentlichen über die gesamte Breite des Gehäuses (2) erstreckt,
- wobei der Verriegelungsbalkens an seinen Enden mit jeweils einer Positionskulisse (34) jeweils eines der Führungsteile (7, 8) zusammenwirkt, die eine mit dem Verriegelungsbalken zusammenwirkende Kontur mit Raststufen für die Trenn- und Betriebsstellung aufweist,
- wobei das Gehäuse (2) Träger eines Hauptschalters (24) und von Trennkontakten (17, 18) ist und
- wobei ein Betätigungsorgan des Hauptschalters (24) an der Bedienfront (5) und die Trennkontakte (17, 18) an einer Rückwand (4) des Gehäuses (2) angeordnet sind.
**dadurch gekennzeichnet,**
- **dass** der Geräteeinschub Hilfstrennkontakte (22) aufweist, die zum Eingriff mit zugeordneten ortsfesten Hilfstrennkontakten (23), mittels einer Betätigungsvorrichtung relativ zu dem Gehäuse (2) des Geräteeinschubes (1) verschiebbar angeordnet sind, und
- **dass** die Betätigungseinrichtung eine den Verriegelungsbalken erfassende Blockiernase (48) aufweist, die bei in Eingriff stehenden Hilfstrennkontakten (22, 23) den Verriegelungsbalken in seiner Ruhestellung sperrt.

2. Niederspannungs-Schaltanlage nach Anspruch 1,
**dadurch gekennzeichnet,**
- **dass** der Verriegelungsbalken (26) an seinen Enden mit Riegelnasen (32, 33) versehen ist, die jeweils über den Umriss des Gehäuses (2) überstehen und
- **dass** die Positionskulissen (34, 35) zum Eingreifen der Riegelnasen (32, 33) dienende Vertiefungen (53, 55) für die Betriebs- und die Trennstellung aufweisen.

3. Niederspannungs-Schaltanlage nach einem der Ansprüche 1 oder 2,
**dadurch gekennzeichnet, dass**
die Positionskulisse einen Hauptkanal (54) mit einer Mündung (59) zum Einführen der Riegelnase (32, 33) und Anschlagflächen (60, 61) zum zwangsläufigen Anhalten einer Verschiebung des Geräteeinschubes (1) beim Einsetzen des Geräteeinschubes (1) in die Führungsteile besitzt.

4. Niederspannungs-Schaltanlage nach einem der vorangehenden Ansprüche,
**dadurch gekennzeichnet, dass**
eine der Trennstellung des Geräteeinschubes (1) zugeordnete Vertiefung (55) der Positionskulisse (34) durch Vorsprünge (56, 58) überdeckt ist, die in beiden Richtungen der Verschiebung die Riegelnase (32, 33) des Verriegelungsbalkens (26) gegen eine unbeabsichtigte Freigabe abstützen.

5. Niederspannungs-Schaltanlage nach einem der vorangehenden Ansprüche,
**dadurch gekennzeichnet,**
**dass** das Gehäuse (2) einen Hauptschalter (24) trägt und
- **dass** zur Sperrung des Hauptschalters (24) gegen unzulässiges Einschalten in bekannter Weise durch eine Betätigungswelle (25) des Hauptschalters (24) eine Riegelstange (43) zum Eingreifen in eine Öffnung (44) eines den Geräteinschub (1) tragenden Fachbodens (10) zu bringen ist und dass durch ein zugleich betätigtes Blockierstück (45) der Verriegelungsbalken (26) oder sein Hubgestänge (36) blockierbar ist.

6. Niederspannungs-Schaltanlage nach einem der vorangehenden Ansprüche,
**dadurch gekennzeichnet, dass** am Verriegelungsbalken (26) eine Verschlussblende (52) zum Verdecken eines Einsteckloches (16) für ein Bedienungswerkzeug eines Fahrantriebes des Geräteeinschubes (1) angebracht ist, derart, dass bei in seiner Ruhestellung befindlichem Verriegelungsbalken (26) der Fahrantrieb unzugänglich ist.

7. Niederspannungs-Schaltanlage nach einem der vorangehenden Ansprüche,
**dadurch gekennzeichnet, dass**
an der Bedienfront (5) des Geräteeinschubes (1) wenigstens ein Griffbügel (12, 13) angebracht ist und dass der zur Betätigung des Verriegelungsbalkens (26) vorgesehene Stellorgan (41) in einer solchen Entfernung von dem Griffbügel (12, 13) und in einer solchen Position angeordnet ist, dass beim Umgreifen des Griffbügels (12, 13) mit den vier Fingern einer Hand der Daumen dem Stellorgan (41) gegenübersteht.

8. Niederspannungs-Schaltanlage nach einem der vorangehenden Ansprüche,
**dadurch gekennzeichnet, dass**
durch die Anordnung von Fachböden (6) das vertikale Spiel des Geräteeinschubes (1) auf ein Maß beschränkt ist, das kleiner ist als die Vertiefungen (53, 55) der Positionskulisse (34).

9. Niederspannungs-Schaltanlage nach einem der vorangehenden Ansprüche,
**dadurch gekennzeichnet, dass**
die Betätigungsvorrichtung zum Verschieben der Hilfstrennkontakte (23) einen Kontaktschieber (46) aufweist, wobei der Kontaktschieber (46) durch ein Sperrstück (62) in der Trennstellung des Hilfstrennkontaktes (22) blockierbar ist.

## Claims

1. Low-voltage switchgear assembly having a rack, having guide parts (7, 8) which are arranged in a fixed position on the rack, having a withdrawable part (1) for holding devices for switching, control and protection, which can be moved via the guide parts from a disconnected position to an operating position, and having at least one locking apparatus for securing the withdrawable part (1) against unauthorized operation,
- in which the locking apparatus has a locking bar (26), a linear movement linkage (36) for moving the locking bar (26) from a rest position, in which the withdrawable part (1) is blocked, to an operating position, which allows the movement, and has an actuating element (41) arranged on a front control panel (5) of the withdrawable part (1) for operating the linear movement linkage (36),
- with the locking bar (26) being arranged in an enclosure (2) for the withdrawable part (1) such that it can pivot,
- with the locking bar (26) extending transversely with respect to the direction of the movement (11) and essentially over the entire width of the enclosure (2),
- with the locking bar interacting at its ends with a respective positioning link (34) of in each case one of the guide parts (7, 8), which has a contour which interacts with the locking bar having latching steps for the disconnected and operating positions,
- with the enclosure (2) being a mount for a main switch (24) and for isolating contacts (17, 18), and
- with an actuating element for the main switch (24) being arranged on the front control panel (5), and the isolating contacts (17, 18) being arranged on a rear wall of the enclosure (2),
**characterized**
- **in that** the withdrawable part has auxiliary isolating contacts (22), which are arranged such that they can be moved by means of an operating apparatus relative to the enclosure (2) of the withdrawable part (1) in order to engage with associated fixed-position auxiliary isolating contacts (23), and
- **in that** the operating device has a blocking tab (48) which grips the locking bar and blocks the locking bar in its rest position when the auxiliary isolating contacts (22, 23) are engaged.

2. Low-voltage switchgear assembly according to Claim 1,
**characterized**
- **in that** the locking bar (26) is provided at its ends with locking tabs (32, 33) which each project beyond the outline of the enclosure (2), and
- **in that** the positioning links (34, 35) have depressions (53, 55), which are used for the locking tabs (32, 33) to engage in, for the operating and disconnected positions.

3. Low-voltage switchgear assembly according to one of Claims 1 or 2,
**characterized in that**
the positioning link has a main channel (54) with a mouth (59) for the insertion of the locking tab (32, 33), and stop surfaces (60, 61) for positively stopping the movement of the withdrawable part (1) when the withdrawable part (1) is being inserted into the guide parts.

4. Low-voltage switchgear assembly according to one of the preceding claims,
**characterized in that**
a depression (55) in the positioning link (34), which is associated with the disconnected position of the withdrawable part (1), is covered by projections (56, 58) which support the locking tab (32, 33) of the locking bar (26) against inadvertent release in both directions of movement.

5. Low-voltage switchgear assembly according to one of the preceding claims,
**characterized**
**in that** the enclosure (2) is fitted with a main switch (24), and
- **in that** in order to block the main switch (24) against unauthorized connection, a locking rod (43) can be moved in a known manner by means of an operating shaft (25) of the main switch (24) in order to engage in an opening (44) in a compartment base (10) to which the withdrawable part (1) is fitted, and in that the locking bar (26) or its linear movement linkage (36) can be blocked by means of a blocking piece (45) which is operated at the same time.

6. Low-voltage switchgear assembly according to one of the preceding claims,
**characterized in that**
a closure panel (52) is fitted to the locking bar (26) in order to conceal an insertion hole (16) for an operating tool for a drive for the withdrawable part (1), such that the drive is inaccessible when the locking bar (26) is in its rest position.

7. Low-voltage switchgear assembly according to one of the preceding claims,
**characterized in that**
at least one handle (12, 13) is fitted to the front control panel (5) of the withdrawable part (1), and **in that** the actuating element (41) which is provided for operation of the locking bar (26) is arranged at such a distance from the handle (12, 13) and in such a position that the thumb is opposite the actuating element (41) when the handle (12, 13) is gripped with the four fingers of one hand.

8. Low-voltage switchgear assembly according to one of the preceding claims,
**characterized in that**
the arrangement of compartment bases (6) restricts the vertical play of the withdrawable part (1) to an extent which is less than the depressions (53, 55) in the positioning link (34).

9. Low-voltage switchgear assembly according to one of the preceding claims,
**characterized in that**
the operating apparatus has a contact slide (46) for movement of the auxiliary isolating contacts (23), in which case the contact slide (46) can be blocked by means of a blocking piece (62) in the disconnected position of the auxiliary isolating contact (22).

## Revendications

1. Installation de distribution à basse tension, comprenant un cadre, des pièces de guidage (7, 8) fixées au cadre, un tiroir électronique (1) qui est destiné à loger des appareils de la technique de commutation, de commande et de protection et qui peut être poussé d'une position de coupure à une position de fonctionnement par l'intermédiaire des pièces de guidage et au moins un dispositif de verrouillage pour protéger le tiroir électronique (1) vis-à-vis d'une utilisation non autorisée,
- le dispositif de verrouillage comportant une barre de verrouillage (26), un mécanisme de levage (36) pour faire passer la barre de verrouillage (26) d'une position de repos bloquant le tiroir électronique (1) à une position de travail libérant le déplacement et un élément de positionnement (41) placé sur une façade de commande (5) du tiroir électronique (1) et destiné à actionner le mécanisme de levage (36),
- la barre de verrouillage (26) étant montée pivotante dans un boîtier (2) du tiroir électronique (1),
- la barre de verrouillage (26) s'étendant transversalement par rapport à la direction du déplacement (11) et sensiblement sur toute la largeur du boîtier (2),
- la barre de verrouillage coopérant à chacune de ses extrémités avec une coulisse de positionnement (34) d'une des pièces de guidage respectives (7, 8), laquelle coulisse de positionnement a un contour coopérant avec la barre de verrouillage et comporte des crans pour la position de coupure et pour la position de fonctionnement,
- le boîtier (2) servant de support à un interrupteur principal (24) et à des contacts de coupure (17, 18), et
- un élément d'actionnement de l'interrupteur principal (24) étant placé sur la façade de commande (5) et les contacts de coupure (17, 18) étant placés sur une paroi arrière (4) du boîtier (2),
**caractérisée par le fait que**
- le tiroir électronique comporte des contacts de coupure auxiliaires (22) qui, pour être en prise avec des contacts de coupure auxiliaires fixes associés (23), sont montés mobiles par rapport au boîtier (2) du tiroir électronique (1) au moyen d'un dispositif d'actionnement, et
- le dispositif d'actionnement comporte un taquet de blocage (48) qui saisit la barre de verrouillage et qui bloque la barre de verrouillage dans sa position de repos lorsque les contacts de coupure auxiliaires (22, 23) sont en prise.

2. Installation de distribution à basse tension selon la revendication 1,
**caractérisée par le fait que**
- la barre de verrouillage (26) est munie à ses extrémités de taquets de verrouillage (32, 33) qui dépassent du contour du boîtier (2), et
- les coulisses de positionnement (34, 35) comportent des encoches (53, 55) servant à saisir les taquets de verrouillage (32, 33) pour la position de fonctionnement et pour la position de coupure.

3. Installation de distribution à basse tension selon l'une des revendications 1 ou 2,
**caractérisée par le fait que** la coulisse de positionnement comporte un canal principal (54) avec une embouchure (59) pour l'introduction du taquet de verrouillage (32, 33) et des surfaces de butée (60, 61) pour l'arrêt forcé d'un déplacement du tiroir électronique (1) lors du placement du tiroir électronique (1) dans les pièces de guidage.

4. Installation de distribution à basse tension selon l'une des revendications précédentes,
**caractérisée par le fait qu'**une encoche (55) située sur la coulisse de positionnement (34) et associée à la position de coupure du tiroir électronique (1) est recouverte par des parties en saillie (56, 58) qui protègent le taquet de verrouillage (32, 33) de la barre de verrouillage (26) vis-à-vis d'un déblocage intempestif dans les deux sens du déplacement.

5. Installation de distribution à basse tension selon l'une des revendications précédentes,
**caractérisée par le fait que**
- le boîtier (2) porte un interrupteur principal (24), et
- pour bloquer l'interrupteur principal (24) contre toute mise en circuit non autorisée, une baguette de verrouillage (43) doit être amenée de manière connue au moyen d'un arbre d'actionnement (25) de l'interrupteur principal (24) à entrer dans une ouverture (44) d'un fond de compartiment (10) supportant le tiroir électronique (1) et la barre de verrouillage (26) ou son mécanisme de levage (36) peuvent être bloqués par une pièce de blocage (45) actionnée en même temps.

6. Installation de distribution à basse tension selon l'une des revendications précédentes,
**caractérisée par le fait qu'**il y a sur la barre de verrouillage (26) un obturateur (52) pour couvrir un trou d'introduction (16) destiné à un outil de manipulation d'un mécanisme de translation du tiroir électronique (1) de telle sorte que le mécanisme de translation est inaccessible lorsque la barre de verrouillage (26) est dans sa position de repos.

7. Installation de distribution à basse tension selon l'une des revendications précédentes,
**caractérisée par le fait qu'**au moins une poignée (12, 13) est agencée sur la façade de commande (5) du tiroir électronique (1) et que l'élément de positionnement (41) prévu pour l'actionnement de la barre de verrouillage (26) est placé à une distance telle de la poignée (12, 13) et dans une position telle que, lorsque la poignée (12, 13) est saisie avec les quatre doigts d'une main, le pouce se trouve en face de l'élément de positionnement (41).

8. Installation de distribution à basse tension selon l'une des revendications précédentes,
**caractérisée par le fait que** la disposition du fond de compartiment (6) limite le jeu vertical du tiroir électronique (1) à une grandeur qui est inférieure aux encoches (53, 55) de la coulisse de positionnement (34).

9. Installation de distribution à basse tension selon l'une des revendications précédentes,
**caractérisée par le fait que** le dispositif d'actionnement destiné au déplacement des contacts de coupure auxiliaires (23) comporte un curseur de contact (46), le curseur de contact (46) pouvant être bloqué par une pièce de blocage (62) dans la position de coupure du contact de coupure auxiliaire (22).
